# EUROPEAN PATENT SPECIFICATION

(11) **EP 0 616 697 B1**
(45) Date of publication and mention of the grant of the patent: **04.03.1998**
(21) Application number: 93900145.9
(22) Date of filing: 11.12.1992
(51) Int. Cl.: G03B 21/132

(54) **DISPLAY SET FOR A TRANSPARENT SHEET INTENDED FOR OVERHEAD PROJECTION**
PRÄSENTATIONSSET FÜR EINE TRANSPARENTFOLIE FÜR OVERHEAD-PROJEKTOR
DEPLIANT POUR FEUILLE TRANSPARENTE DESTINEE A LA RETROPROJECTION

(30) Priority: 13.12.1991 FR 9115493
(43) Date of publication of application: 28.09.1994
(73) Proprietor: MINNESOTA MINING AND MANUFACTURING COMPANY, St. Paul, Minnesota 55133-3427 (US)
(72) Inventor: DURAND, Marcel, Paul, F-95150 Taverny (FR)
(74) Representative: VOSSIUS & PARTNER
(86) International application number: US9210744
(87) International publication number: WO9312454

(56) References cited:
- EP-A- 0 369 104
- DE-A- 3 909 160
- US-A- 3 698 741
- US-A- 3 709 590

## Description

### Field of the Invention

The invention relates to a set intended to display, in convenient manner, a transparent sheet intended for overhead projection.

### Background of the Invention

A display set is already known from the document WO-A-81/02639, which comprises a substantially rectangular transparent envelope adapted to receive the transparent sheet, and retaining means - in this case perforations - making it possible to retain the envelope in a binder. A plurality of such sets can be collected in the same binder, but in order to use them a speaker must take out the desired envelope individually from the binder in order to arrange it on the overhead projector, which results in a handling operation which can be a source of confusion.

The document US-A-3,253,358 furthermore discloses a binder for a plurality of transparent sheets which can be placed on the glass of an overhead projector without being detached from the binder. However, in addition to the fact that this document does not relate to envelopes but directly to bound transparencies, this form of presentation does not permit the easy incorporation into the binder of the notes which the speaker is to use, enabling him at the same time to comment on the transparency placed on the overhead projector and to see what the next transparency will be.

The object of the invention is to overcome the disadvantages of the known devices and to provide a display set which combines the convenience of the envelopes known from the document WO-A-81/02639 with the possibility of rational organization in the binder.

### Summary of the Invention

The present invention is defined in claim 1.

The object of the invention is achieved by a display set for a transparent sheet intended for overhead projection which comprises a substantially rectangular transparent envelope adapted to received the transparent sheet, retaining means making it possible to retain the envelope in a binder, and a substantially rectangular backing articulated to the envelope substantially along one of its sides. The retaining means are situated on the edge of the backing on the side opposite the first-mentioned edge in order to retain the backing in the binder so that the envelope can, as desired, be folded up onto the said backing or unfolded in order to be placed on an overhead-projection apparatus next to the binder.

According to preferable features, the backing is opaque, and at least one of its faces consists of a material which accepts writing applied to it, where the speaker's notes can be written.

The retaining elements are preferably perforations. The envelope preferably comprises an opaque flap articulated on its edge opposite the edge connected to the backing.

The display sets in accordance with the invention are retained in a given order in the same binder arranged next to an overhead-projection apparatus, it being possible for the binder to be opened and to expose two consecutive sets, the first one of which is folded up, while the second, of order n next to the said apparatus can be unfolded so that the envelope is placed on the said apparatus; the said first opposite set is of order n + 1, and is folded in such a way that the envelope is situated on top of the backing and is therefore exposed.

In this way, the speaker can not only read the presentation notes situated on the bottom part of the set n which is being displayed, but he has in front of him the transparency of order n + 1 which is detached from its respective backing.

### Brief Description of the Drawings

Other features and advantages of the invention will become apparent upon reading the following description of a preferred embodiment. Reference will be made to the attached drawings, in which:
Figure 1 shows in perspective a plurality of display sets arranged in their open binder on the overhead projector and its adjacent table, in a first embodiment;
Figure 2 shows in front view the sets of Figure 1, some of the elements of which are shown at different stages of folding;
Figures 3 and 4 are views similar to Figures 1 and 2 for a second embodiment.

### Description of the Preferred Embodiment

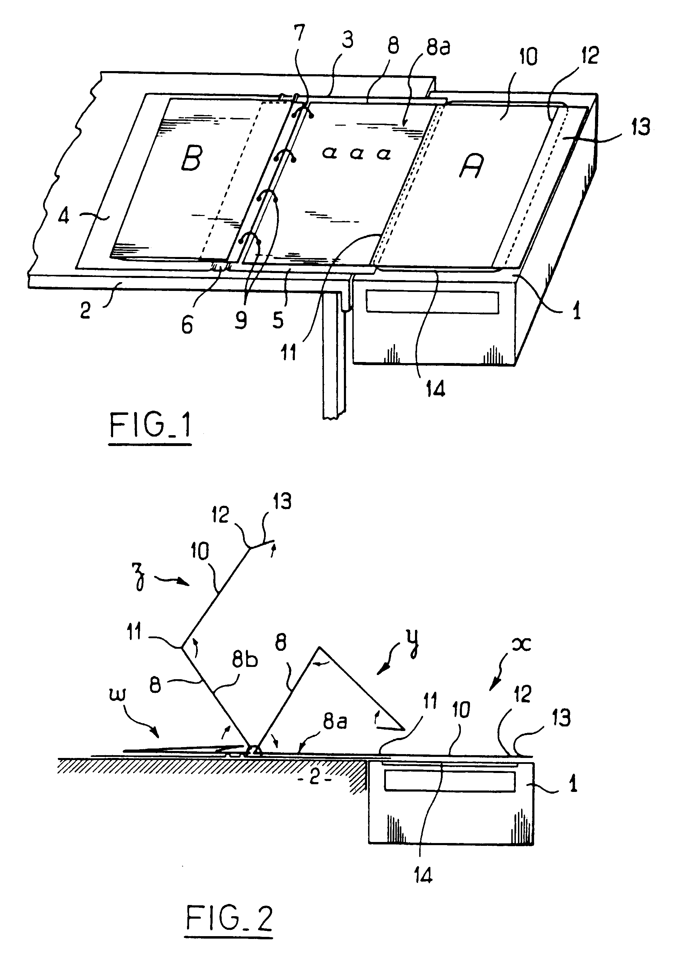

Figure 1 shows an overhead projection apparatus 1 arranged next to a table 2 so that their upper surfaces are in the same plane.

On the table 2 there is placed a binder 3 composed of two covers 4 and 5 articulated by grooves on a spine 6. The binder 3 comprises retaining rings 7 which can open and close for a filing of a plurality of display sets in accordance with the invention.

Each display set comprises a relatively rigid, opaque rectangular backing 8. This backing comprises, on one of its edges, perforations 9 interacting with the rings 7 in order to retain the backings 8 in the binder; on the opposite edge, the backing 8 is associated with the transparent rectangular envelope 10 articulated on one of its edges 11 to the backing 8 so as to be able to be folded up completely on this backing 8 or to extend flat in a position next to the backing 8.

The envelope 10, which has not been shown in detail because it is of a known type, comprises two thicknesses of transparent material which are joined together on at least two edges, the remaining edges remaining open in order to permit the introduction of a transparency. It is preferred that the edges which are at the bottom and the right when the envelope 10 is in the extended, flat position be open, although the envelope 10 will function effectively if the top and right edges are open or only one of the top, bottom or right edges is open.

A relatively narrow opaque flap 13 is articulated to the envelope 10 on the edge 12 opposite the edge 11.

In the use position such as that shown in Figure 1, the binder 3 is open on the table next to the overhead projector 1, and the display set in the course of demonstration is unfolded so that the envelope 10 containing the transparency covers the window 14 of the overhead projector.

Consequently, the person giving the presentation has in front of him on the one hand, the viewed text "A" which he can see directly on the window and, on the other hand, the comments "aaa" which it was possible to write on the visible face 8a of the backing 8.

Simultaneously, the person giving the presentation has in front of him the next set, the text "B" of which he can see, appearing on the face 8b of the backing 8, which face is advantageously produced in a light colour permitting a good contrast with the writing present on the transparency which covers it.

The stages of folding are illustrated in Figure 2. Four sets w, x, y, z in accordance with the invention can be seen here.

The set x is in the course of demonstration, in the folded-out position, while the set w is in the standby position, folded up, in the binder (the flap 13 is turned back beneath the envelope 10 which is folded up on the face 8b of the backing 8).

In order to move from the standby position w to the demonstration position x, the operator unfolds the set into the intermediate position z by opening the articulations 11 and 12. Then, about the articulation formed by the retaining means 9 interacting with the rings, he can place the set flat in the position x.

Once the transparency of the set x has been viewed, it is advisable to place the set in the stored position by folding it up into the intermediate position y and by turning it back flat into this folded-up position, only the face 8a of the opaque backing 8 being visible (Figure 2 does not show any set in this stored position).

Because of this filing method, the file according to the invention is used in the opposite way to a normal file: the last transparency in the pile (when the file is open) is the first in the presentation.

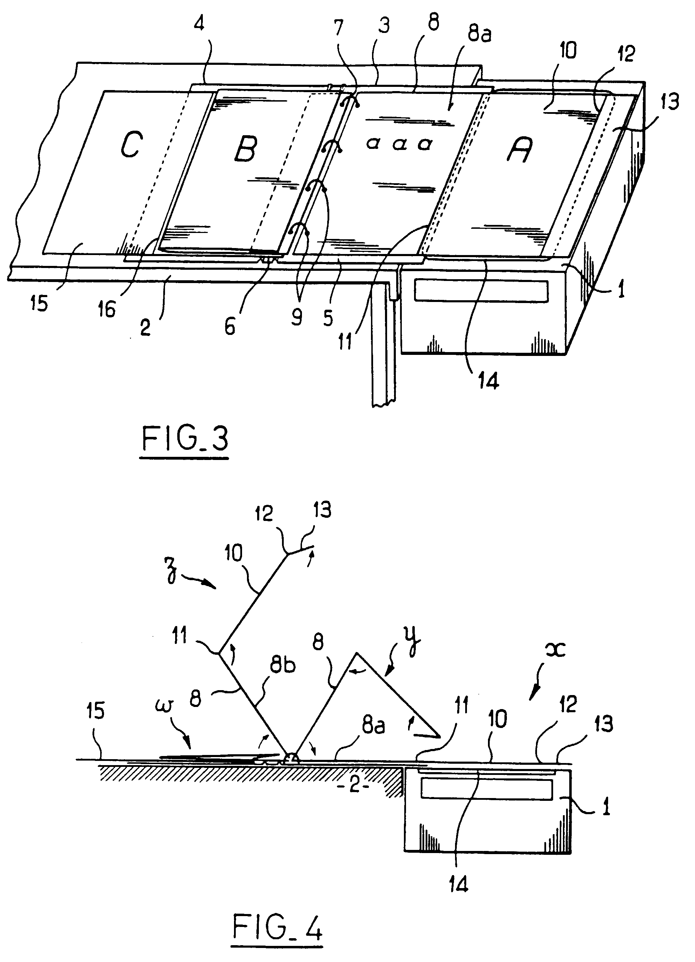

Figures 3 and 4 show an alternative of the invention in which an additional sheet 15 is provided which has two flaps articulated on a fold 16. This sheet, likewise retained in the binder 3, can be folded out, as shown in the two Figures 3 and 4, in order to have a face substantially next to the sheets in the standby position w. It is possible to write on this face, normally opaque, a text "C" which will be visible to the person giving the presentation: this text "C" is advantageously the list of contents of the transparencies, by means of which the person giving the presentation may continually know how far he has gotten and be able to go back very easily to find a transparency which has already been presented.

The sheet 15, when the binder is put away, is folded up on its fold 16 so as to be able to fit into the binder 3.

## Claims

1. A display set designed for overhead projection of a transparency the display set comprising:
a substantially rectangular transparent envelope (10) adapted to receive a transparency,
means (9) for retaining said envelope in a binder (3),
characterized in that it further comprises a substantially rectangular opaque back member (8) attached along one of its sides to said envelope (10) for folding said envelope (10) along said one side, and in that said retaining means (9) is located on the edge of said opaque back member (8) at the side opposite said one side for retaining said opaque back member (8) in a binder (3) in such a way that said envelope (10) can selectively be folded on said opaque back member (8) or unfolded for placement on an overhead projector (1) adjacent to a binder (3).

2. A set according to claim 1 characterized in that said retaining means (9) are punched holes.

3. A set according to claim 1 or 2 characterized in that said envelope (10) has an opaque flap (13) attached thereto along its side opposite to the side to which said opaque back member (8) is attached.

4. A set according to claim 1, 2 or 3 characterized in that at least one face (8a) of said opaque back member (8) is made from a material that accepts text written thereonto.

## Patentansprüche

1. Präsentationsset, das für ein Transparent für einen Overhead-Projektor ausgelegt ist, wobei das Präsentationsset aufweist:
eine im wesentlichen rechteckige, transparente Hülle (10), die ein Transparent aufnehmen kann;
eine Einrichtung (9) zum Halten der Hülle in einem Ordner (3),
**dadurch gekennzeichnet,** daß es ferner ein im wesentlichen rechteckiges, undurchsichtiges Rückteil (8) aufweist, das entlang einer seiner Seiten an der Hülle (10) befestigt ist, um entlang der einen Seite die Hülle (10) zu falten, und daß die Halteeinrichtung (9) an dem Rand des undurchsichtigen Rückteils (8) an der Seite, die der einen Seite gegenüberliegt, angeordnet ist, um das undurchsichtige Rückteil (8) in einem Ordner (3) so zu halten, daß die Hülle (10) wahlweise auf das undurchsichtige Rückteil (8) geklappt oder zur Anordnung auf einem Overhead-Projektor (1) neben einem Ordner (3) aufgeklappt werden kann.

2. Set nach Anspruch 1, **dadurch gekennzeichnet,** daß die Halteeinrichtung (9) Stanzlöcher sind.

3. Set nach Anspruch 1 oder 2, **dadurch gekennzeichnet,** daß die Hülle (10) eine undurchsichtige Umschlagklappe (13) aufweist, die an ihr entlang ihrer Seite befestigt ist, die der Seite gegenüberliegt, an der das undurchsichtige Rückteil (8) befestigt ist.

4. Set nach Anspruch 1, 2 oder 3, **dadurch gekennzeichnet**, daß mindestens eine Seite (8a) des undurchsichtigen Rückteils (8) aus einem Material besteht, das einen auf sie geschriebenen Text annimmt.

## Revendications

1. Dépliant conçu pour la rétroprojection d'une feuille transparente, le dépliant comprenant :
une enveloppe transparente sensiblement rectangulaire (10) prévue pour recevoir une feuille transparente,
des moyens (9) de retenue de la dite enveloppe dans une reliure (3),
caractérisé en ce qu'il comprend en outre un dos opaque sensiblement rectangulaire (8) attaché le long d'un de ses côtés à la dite enveloppe (10) pour pliage de la dite enveloppe (10) le long du dit un côté, et en ce que les dits moyens de retenue (9) sont situés sur le bord du dit dos opaque (8) du côté opposé au dit un côté, pour retenir le dit dos opaque (8) dans une reliure (3) d'une manière telle que la dite enveloppe (10) peut sélectivement être repliée sur le dit dos opaque (8) ou dépliée pour positionnement sur un rétroprojecteur (1) adjacent à une reliure (3).

2. Dépliant suivant la revendication 1, caractérisé en ce que les dits moyens de retenue (9) sont des trous poinçonnés.

3. Dépliant suivant la revendication 1 ou 2, caractérisé en ce que la dite enveloppe (10) comporte un rabat opaque (13) attaché à l'enveloppe le long de son côté opposé au côté auquel le dit dos opaque (8) est attaché.

4. Dépliant suivant la revendication 1, 2 ou 3, caractérisé en ce qu'au moins une face (8a) du dit dos opaque (8) est en une matière qui accepte l'écriture d'un texte.
